# EUROPÄISCHE PATENTANMELDUNG

(11) **EP 0 983 910 A1**
(43) Veröffentlichungstag der Anmeldung: **08.03.2000**
(21) Anmeldenummer: 99114314.0
(22) Anmeldetag: 21.07.1999
(51) Int. Cl.: B60R 21/02, B60R 19/00, B60N 2/42, B62D 21/15

(54) **Fahrgastzelle**

(30) Priorität: 29.08.1998 DE 19839519
(71) Anmelder: DaimlerChrysler AG, 70567 Stuttgart (DE)
(72) Erfinder: Weber, Norbert, 71149 Bondorf (DE)

(57) **Zusammenfassung**

Die Erfindung betrifft eine Fahrgastzelle einer Fahrzeugkarosserie mit einer die Fahrzeuginsassen bei Seitenkollision schützenden Schutzeinrichtung, die in jeder Fahrzeugtür (12), jedem Fahrzeugsitz (14) und in der am Karosserieboden (11) befestigten Mittelkonsole (13) integrierte, quer zur Zellenlängsachse verlaufende Versteifungslemente (21,21',22,22',23,23') und zwischen diesen angeordnete Prallplatten (24) umfaßt, die alle in einer horizontalen Ebene liegen und sich bei Seitenkollision über die Prallplatten (24) aneinander abstützen. Zwecks Verbesserung der Schutzeinrichtung derart, daß bereits mit Einsetzen der Seitenverformung der Fahrgastzelle beim Crash die Versteifungselemente (21 bis 23') einen durchgehenden Querträger für die Kraftaufnahme bilden, ist mindestens eines der bei Seitenkollision quer zur Zellenlängsachse sich aneinander abstützenden Versteifungselemente (21 bis 23') auf eine Maximallänge derart vergrößerbar ausgebildet, daß alle im Vorkollisionszustand der Fahrgastzelle zwischen den Versteifungselementen und Prallplatten vorhandenen, lichten Abstände (a₁,a₂) verschwunden sind. Ein im Kollisionsfall aktivierbarer Aktuator (20) stellt das mindestens eine Versteifungselement auf diese Maximallänge ein.

## Beschreibung

Die Erfindung betrifft eine Fahrgastzelle einer Fahrzeugkarosserie der im Oberbegriff des Patentanspruchs 1 angegebenen Gattung.

Bei solchen, z.B. aus der DE 28 16 318 C2 bekannten Fahrgastzellen mit Schutzeinrichtung für den Fall eines Seitencrash bestehen bedingt durch die Längsverschiebbarkeit der Fahrzeugsitze und der Schwenkbeweglichkeit der Fahrzeugtüren zwischen den beim Seitencrash sich in Querrichtung zur Zellenlängsachse über die Prallplatten aneinander abstützenden Versteifungselementen unvermeidliche Zwischenräume, die beim Seitencrash erst durch Verformung von Strukturteilen beseitigt werden müssen, bevor die Versteifungselemente "crashverblockt" als eine Einheit auf die Fahrgastzellenstruktur wirken und als durchgehender Querträger die Kräfte von der Seite her aufnehmen und auf die gesamte Karosserie übertragen.

Bei einem bekannten Fahrzeugsitz (EP 0 470 413 A1) weist die Schutzvorrichtung im Sitz angeordnete Sicherheitselemente auf, welche durch eine Vorrichtung im Gefahrenfall selbsttätig aus ihrer Ruheposition innerhalb des Sitzes etwa horizontal in eine Wirkstellung bewegt werden. In der Wirkstellung reichen die Sicherheitselemente bis zu sich an den Sitz seitlich anschließenden Bauteilen des Fahrzeugs, z.B. an die Türschwellen oder an die Mittelsäule und stützen sich dort ab.

Bei einem ebenfalls bekannten Fahrzeugsitz (DB 295 09 229 U1) weist die Schutzvorrichtung in die Vordersitze eingebaute Seitenschutzteleskope auf, die mit Anlegen des Sicherheitsgurtes ausgefahren werden, wobei sich die Teleskope einerseits an den Innenwänden der Karosserie und andererseits aneinander abstützen, sodaß ein durchgehender Querträger hergestellt wird, der die Fahrgastzelle in Querrichtung versteift. Jedes Seitenschutzteleskop besteht in einem Ausführungsbeispiel aus zwei Gewindestangen, die mit ihren Stangenenden in Innengewindeabschnitten mit gegensinniger Gewindesteigung einer Gewindehülse verschraubbar sind. Die Gewindehülse wird über ein Schneckenrad in Drehrichtung versetzt.

Der Erfindung liegt die Aufgabe zugrunde, bei einer Fahrgastzelle der eingangs genannten Art die Schutzeinrichtung zum Schutz der Fahrzeuginsassen bei Seitenkollision so zu verbessern, daß spätestens mit Einsetzen der Seitenverformung der Fahrgastzelle im Crash die Versteifungselemente schon crashverblockt sind und einen durchgehenden Querträger für die Kraftaufnahme bilden.

Die Aufgabe ist erfindungsgemäß durch die Merkmale im Patentanspruch 1 bzw. 5 bzw. 7 gelöst.

Die erfindunasgemäße Fahrgastzelle hat den Vorteil, daß im Crashfall durch den von geeigneten Sensoren ausgelösten Aktuator sofort aus den einzelnen Versteifungselementen mit dazwischenliegenden Prallplatten ein durchgehender Querträger hergestellt wird, der die Kräfte von der Crashseite her aufnimmt und auf die gesamte Karosserie und somit auch auf die gegenüberiegende Seite überträgt; denn im Augenblick des Crash werden durch die Verlängerung des mindestens einen Versteifungselements alle Zwischenräume zwischen den Versteifungselementen und Prallplatten schlagartig beseitigt, so daß vor Einsetzen einer irgendwelchen Karosserieverformung alle Versteifungselemente und Prallplatten in Querrichtung spaltlos aneinanderliegen.

Vorteilhafte Ausführungsformen der erfindungsgemäßen Fahrzeugkarosserie mit zweckmäßigen Ausgestaltungen und Weiterbildungen der Erfindung ergeben sich aus den weiteren Änsorüchen.

Die Erfindung ist anhand von in der Zeichnung dargestellten Ausführungsbeispielen im folgenden näher beschrieben. Es zeigen jeweils in schematischer Darstellung:
- Fig. 1: ausschnittweise einen Querschnitt einer Fahrgastzelle einer Fahrzeugkarosserie mit eingebautem Fahrzeugsitz in Rückansicht und integrierter Schutzeinrichtung vor Seitenkollision,
- Fig. 2: eine verarößerte Darstellung des Ausschnitts II in Fig. 1 eines Versteifungselements der Schutzeinrichtung,
- Fig. 3 und 4: jeweils eine gleiche Darstellung wie in Fig. 1 mit jeweils modifizierter Schutzeinrichtung,
- Fig. 5: eine gleiche Darstellung wie in Fig. 4 mit aktivierter Schutzeinrichtung bei Seitenkollision,
- Fig. 6 und 7: jeweils eine gleiche Darstellung wie in Fig. 2 eines Versteifungselements gemäß zweier weiterer Ausführungsbeispiele.

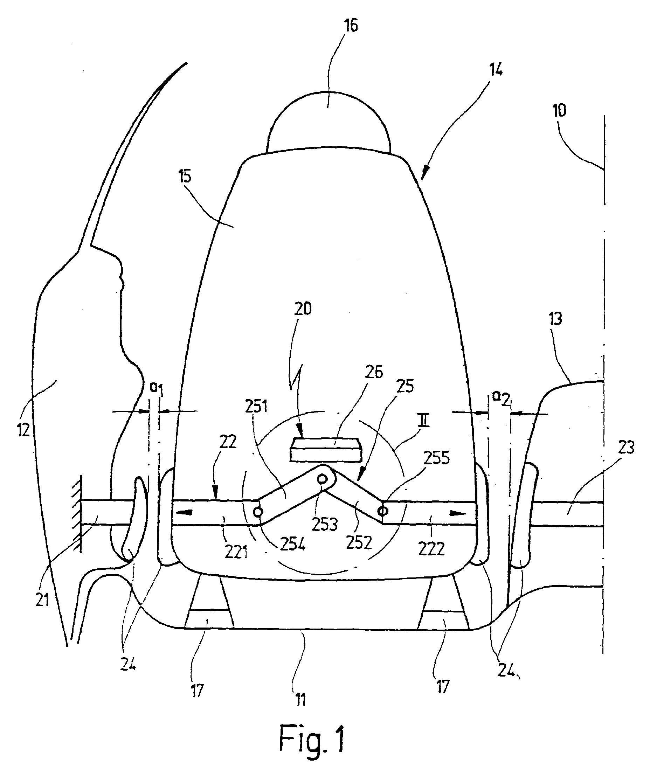

In Fig. 1 ist eine Fahrgastzelle einer Fahrzeugkarosserie schematisch im Querschnitt und auszugsweise bis zur Symmetrie-Mittelebene 10 der Fahrgastzelle dargestellt. Von der Fahrgastzelle ist der Fahrzeugboden 11, die linke Fahrzeugtür 12 und die mittig auf dem Karosserieboden befestigte Mittelkonsole 13 zu sehen. Zwischen der Fahrzeugtür 12 und der Mittelkonsole 13 ist ein linker Fahrzeugsitz 14, z.B. der Fahrersitz, angeordnet, von dem in Fig. 1 lediglich die Rückseite der Rückenlehne 15 und der Kopfstütze 16 zu sehen sind. Der Fahrzeugsitz 14 ist längsverschiebbar am Karosserieboden 11 gehalten und in jeder Längsverschiebestellung arretierbar. Die hierzu am Karosserieboden 11 befestigte Führungsschienen sind in Fig. 1 mit 17 bezeichnet. Zur Vervollständigung des Querschnitts der Fahrgastzelle ist Fig. 1 um die rechte Zellenhälfte symmetrisch zur Mittelebene 10 zu ergänzen, so daß in gleicher Anordnung noch eine rechte Fahrzeugtür 12 und ein rechter Fahrzeugsitz 14, z.B. der Beifahrersitz, vorhanden sind.

Zum Schutz der Sitzbenutzer vor lebensgefährlichen Verletzungen im Falle einer Seitenkollision ist eine Schutzeinrichtung 20 vorgesehen, die eine Mehrzahl von quer zur Längsachse 10 der Fahrgastzelle verlaufenden Versteifungselementen aufweist. Ein Versteifungselement 21 ist dabei in jeder Fahrzeugtür 12, ein Versteifungselement 22 in jedem Fahrzeugsitz 14 und ein Versteifungselement 23 in der Mittelkonsole 13 integriert. An den einander zugekehrten Stirnenden der Versteifungselemente 21 ist jeweils eine Prallplatte 24 angeordnet, so daß sich jeweils in den Zwischenräumen zwischen jeder Fahrzeugtür 12 und jedem Fahrzeugsitz 14 einerseits und jedem Fahrzeugsitz 14 und der Mittelkonsole 13 andererseits zwei Prallplatten 24 mit lichtem Abstand a₁ bzw. a₂ gegenüberliegen. Während die Versteifungselemente 22,23 in den Fahrzeugsitzen 14 und in der Mittelkonsole 13 an jedem Ende eine Prallplatte 24 tragen, sind die Versteifungselemente 21 in den Fahrzeugtüren 12 nur an dem inneren Stirnende mit einer Prallplatte 24 belegt und stützen sich mit dem äußeren Stirnende türseitig ab. Die Versteifungselemente 21 - 23 sind als Profile aus hochfestem Material, Z.B. aus Metall oder zur Gewichtsersparnis aus Kevlar, ausgebildet und mit den notwendigen Rippen und Verstärkungen versehen. Es versteht sich, daß die vorstehend beschriebene Ausführung der Versteifungselemente 21,23 und Prallplatten 24 als in der Fahrzeugtür 12 und in der Mittelkonsole 13 integrierte, separate Teile nicht zwingend ist. Vielmehr kann das Versteifungselement 21 mit Prallplatte 24 als Teil der Konstruktion der Fahrzeugtür 12 in Form von Verstärkungsblechen ausgeführt werden, so daß sich eine Prallzone ergibt, die sich als Teil der Türkonstruktion über mindestens die Länge des Sitzverstellweges erstreckt und damit in jeder Sitzverstellposition den angestrebten Schutz bietet. Die Prallfläche der Prallzone muß nicht identisch mit der Oberfläche des Türbelags sein, sondern kann tiefergelegt werden, so daß im Falle einer Seitenkollision das Versteifungselement 22 mit Prallplatten 24 im Fahrzeugsitz 14 durch Zerstörung, z.B. der Türtasche, zur Anlage an die Prallzone in der Fahrzeugtür 12 kommt.

Das gleiche gilt für die Mittelkonsole 13. Hier wäre es möglich, die Mittelkonsole 13 als Einbauteil mit einer hochfesten Konstruktion aus Rippen, Verstärkungen etc. auszuführen, die im Seitenkollisionstall die Kräfte im Kraftschluß weiterleitet. Alternativ kann die Mittelkonsole 13 innerhalb definierter Zonen an ihren Seitenflanken mit massiven, die Prallplatten 24 bildenden Verstärkungen versehen werden, welche die Längs- und Höhenverstellung des Fahrzeugsitzes 14 berücksichtigen. Die beiden Verstärkungen sind über einen Rahmen oder ähnlichem so miteinander verbunden, daß die Kräfte weitergeleitet werden. Weiterhin kann das Versteifungselement 23 mit Prallplatte 24 in der Mittelkonsole 13 als eine über den Mitteltunnel am Bodenblech festgelegte steife Konstruktion ausgeführt werden, wobei die Mittelkonsole 13 als Verkleidungsteil darübergesetzt wird.

Sind aus Designgründen die wie vorstehend beschrieben ausgeführten Versteifungselemente 21 und 23 mit Prallplatten 24 in den Fahrzeugtüren 12 und in der Mittelkonsole 13 im Bereich ihrer Prallzonen nicht eben, sondern z.B. mit "weglaufenden" Konturen ausgebildet, so werden zweckmäßigerweise zwischen den Versteifungselementen 22 in den Fahrzeugsitzen 14 und ihren Prallplatten 24 Gelenke vorgesehen, die dann ein optimales Abstützen der Prallplatten 24 an den schrägen Prallzonen von Fahrzeugtüren 12 und Mittelkonsole 13 ermöglichen.

Während die Versteifungselemente 21 und 23 mit Prallplatten 24 in Fahrzeugtüren 12 und Mittelkonsole 13 in Richtung Fahrzeugbreite mit einer unveränderlichen Länge ausgebildet sind, ist abweichend davon das Versteifungselement 22 in den beiden Fahrzeugsitzen 14 so ausgebildet, daß es auf eine Maximallänge vergrößerbar ist. Diese Maximallänge ist dabei so bemessen, daß alle im Vorkollisionszustand der Fahrgastzelle zwischen den Versteifungselementen 21 - 23 und Prallplatten 24 vorhandenen lichten Abstände a₁,a₂ durch die Längenvergrößerung im Augenblick eines Seitencrash zu Null werden. Im Ausführungsbeispiel der Fig. 1 vergrößert sich die Länge des Versteifungselements 22 in dem linken Fahrzeugsitz 14 im Augenblick des Crash um die Summe a₁ + a₂, so daß die Prallplatten 24 der drei Versteifungselemente 21 - 23 spaltlos aneinanderliegen.

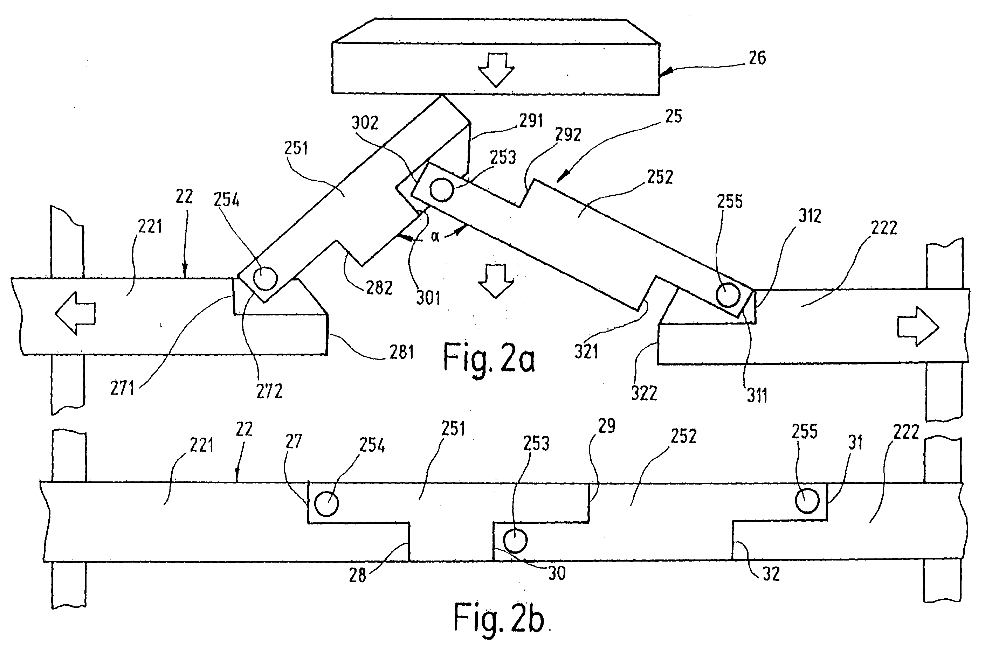

Zur Realisierung einer solchen Längenvergrößerung weist das Versteifungselement 22 in jedem Fahrzeugsitz 14 einen aus zwei Hebelarmen 251,252 gebildeten V-förmigen Kniehebel 25 auf, die im Kniegelenk 253 schwenkbeweglich miteinander verbunden sind. Die von dem Kniegelenk 53 abgekehrten Enden der beiden Hebelarme 251,252 sind über Gelenke 254,255 mit den beiden Abschnitten 221,222 des Versteifungselements 22 verbunden. Die Achsen der Gelenke 253 - 255 sind parallel zueinander ausgerichtet und verlaufen senkrecht zur Zeichenebene der Fig. 1. Die Längen der beiden Hebelarme 251,252 und der von den beiden Hebelarmen 251,252 eingeschlossene Kniewinkel α (Fig. 2) sind so aufeinander abgestimmt, daß in der Strecklage des Kniehebels 25, in welcher die beiden Hebelarme 251,252 und die Stangenabschnitte 221,222 miteinander fluchten, die Spaltabstände a₁ und a₂ zwischen den Prallplatten 24 Null sind, alle Prallplatten 24 damit spaltlos aneinanderliegen und alle Versteifungselemente 21 - 23 links und rechts der Symmetriemittelebene 10 einen durchgehenden Querträger bilden.

Zur Aktivierung der Schutzeinrichtung 20 bei Seitencrash ist ein Aktuator 26 im Fahrzeugsitz 14 integriert, der bei seiner Aktivierung eine Druckkraft auf das Kniegelenk 253 des Kniehebels 25 ausübt, die den Kniehebel 25 in seine Strecklage überführt. Dieser Aktuator 26 kann als pneumatischer oder pyrotechnischer Antrieb ausgebildet sein und wird bei Seitenkollision durch geeignete Sensoren gezündet, so daß er explosionsartig den Kniehebel 25 in dessen Strecklage treibt und diesen dort so verriegelt, daß ein Zurückdrücken in die Ausgangslage blockiert ist.

In Fig. 2 ist der Kniehebel 25 im einzelnen vergrößert dargestellt, und zwar in Fig. 2a im Vorkollisionszustand und in Fig. 2b in seiner Strecklage im Moment der Seitenkollision. Die beiden Hebelarme 251,252 sind im Ausführungsbeispiel asymmetrisch ausgebildet und so, daß in der Strecklage eine Kraftübertragung nicht über die Gelenke 253 - 255 sondern über insgesamt sechs Flächenpaare 27 - 32 erfolgt, die in Kraftflußrichtung aneinanderliegen. Zwei Flächenpaare 27,28 bzw. 31,32 sind dabei jeweils zwischen einem Stangenabschnitt 221 bzw. 222 und einem Hebelarm 251 bzw. 252 und zwei Flächenpaare 29,30 zwischen den beiden Hebelarmen 251 und 252 ausgebildet. Die einzelnen Flächen der Flächenpaare 27 - 32 sind in Fig. 2a jeweils mit 271,272 - 321,322 bezeichnet. Im Kollisionsfall liegen in Strecklage des Kniehebels 25 die Abstützflächen plan aneinander. Die Hebelform, z.B. gestreckt oder gekrümmt, und die Anzahl und Größe der Flächenpaare sind konstruktiv bedingt und werden entsprechend den Anforderungen ausgebildet.

Bei großer Längsverschiebbarkeit der Fahrzeugsitze 14 in den Führungsschienen 17 ist es zweckmäßig, die Versteifungselemente 22 in den Fahrzeugsitzen 14 jeweils paarweise auszuführen. Die beiden Versteifungselemente 22 eines jeden Paars verlaufen dabei im Parallelabstand voneinander und sind an ihren Enden jeweils gemeinsam an einer Prallplatte 24 befestigt. Dadurch wird auch in extrem unterschiedlichen Verschiebestellungen der beiden Fahrzeugsitze 14 bei einem Seitencrash ein steifer Querträger zwischen den beiden Fahrzeugtüren 14 hergestellt, der nicht in Längsrichtung abknicken kann. Die Prallplatten 24 können - wie dies für das in der Mittelkonsole 13 angeordnete Versteifungselement 23 dargestellt ist - in den Fahrzeugtüren 12 und in den Fahrzeugsitzen 14 integriert und durch die jeweilige Verkleidung kaschiert sein, damit der Innenraum der Fahrgastzelle im Vorkollisionszustand ein ästhetisch ansprechendes Bild bietet, das nicht durch technisch konstruktive Bauelemente gestört wird. Für das in seiner Länge veränderliche Versteifungselement 22 in den Fahrzeugsitzen 14 ist dann in der Sitzverkleidung im Bereich jeder Prallplatte 24 eine Reißnaht vorzusehen, die bei der Überführung des Kniehebels 25 in seine Strecklage definiert reißt und so den Austritt der Prallplatte 24 aus der Sitzverkleidung ermöglicht.

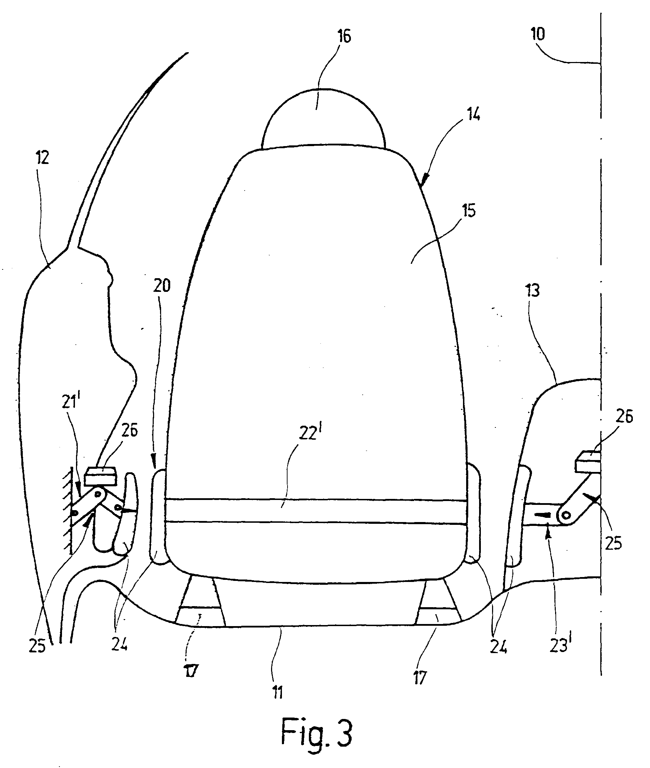

Die modifizierte Schutzeinrichtung 20 bei der in Fig. 3 schematisch dargestellten Fahrgastzelle unterscheidet sich von der vorstehend beschriebenen Schutzeinrichtung 20 dadurch, daß das in den Fahrzeugsitzen 14 integrierte Versteifungselement 22' als durchgehende längenkonstantes Profil mit endseitigen Prallplatten 24 ausgebildet ist und die in den Fahrzeugtüren 12 in der Mittelkonsole 13 vorhandenen Versteifungselemente 21' und 23' als nunmehr längenveränderliche Versteifungselemente mit Kniehebel 25 und Aktuator 26 ausgebildet sind. Im übrigen ist Aufbau und Wirkungsweise wie zu Fig. 1 beschrieben, so daß gleiche Bauteile mit gleichen Bezugszeichen versehen sind.

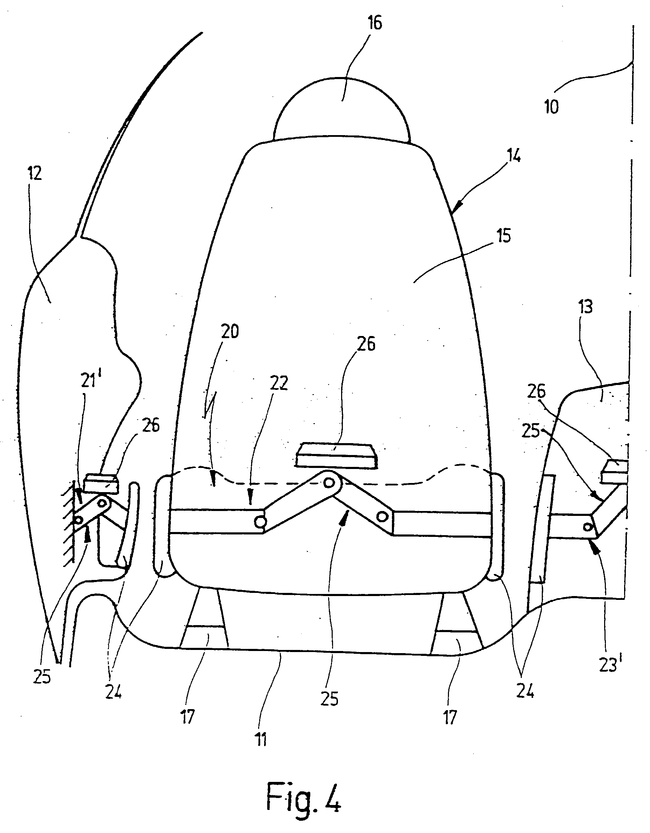

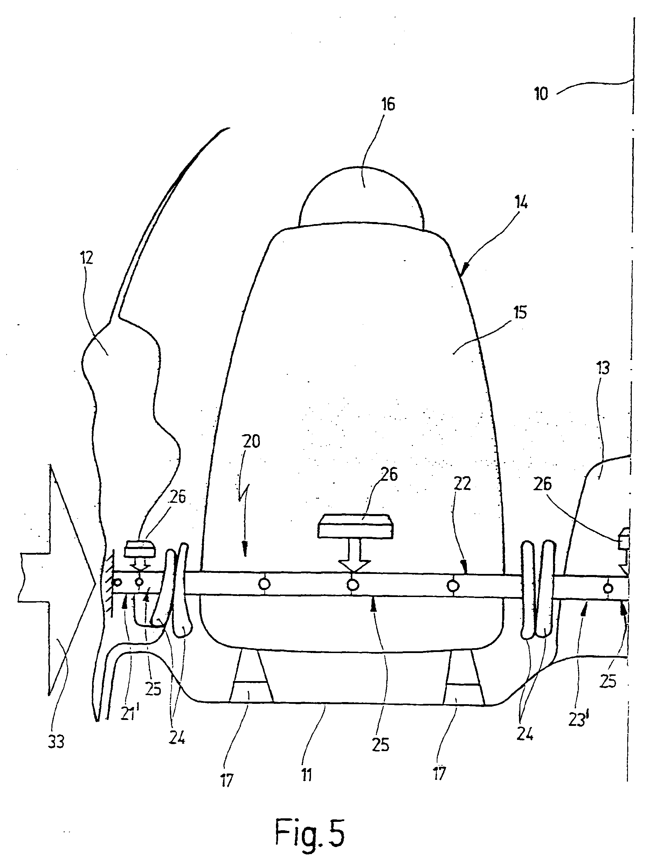

Das in Fig. 4 dargestellte weitere Ausführungsbeispiel einer Schutzeinrichtung 20 bei Seitenkollision innerhalb einer Fahrgastzelle unterscheidet sich von den beiden zuvor beschriebenen Schutzeinrichtungen 20 dadurch, daß nunmehr alle Versteifungselemente 21',22 und 23' jeweils mit einem Kniehebel 25 und einem den Kniehebel 25 in seine Strecklage treibenden Aktuator 26 versehen sind, so daß bei Seitenkollision alle Versteifungselemente 21',22 und 23' ihre Länge vergrößern. Im Kollisionsfall gehen alle Kniegelenke 25 in ihre Strecklage über und werden darin verrastet, wie dies in Fig. 5 dargestellt ist. Wie in Fig. 5 ebenfalls verdeutlicht ist, sind damit alle Spaltabstände, wie sie im Vorkollisionszustand existieren und in Fig. 1 mit a₁, a₂ bezeichnet sind, in der Strecklage der Kniehebel 25 zu Null gemacht worden, so daß alle Prallplatten 24 spaltlos aneinanderliegen und die gesamte Schutzeinrichtung 20 einen steifen durchgehenden Querträger zwischen den beiden Fahrzeugtüren 12 bildet, der die Kräfte auf der einen Seite aufnimmt und in die Fahrgaststruktur und somit auch auf die gegenüberliegende Seite überträgt.

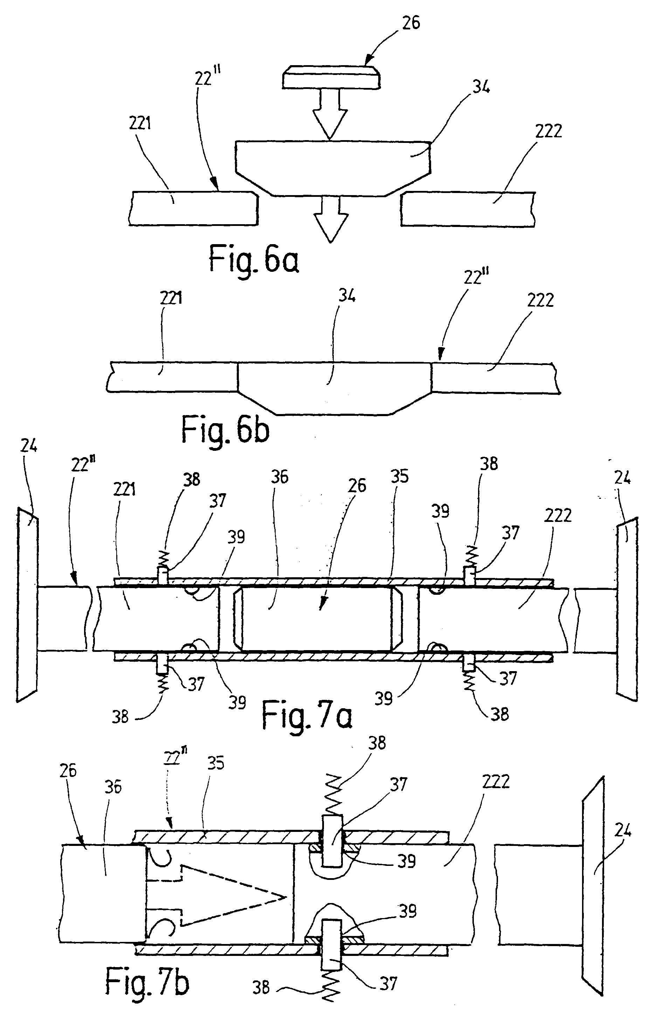

In Fig. 6 und 7 sind zwei weitere Ausführungsbeispiele eines Versteifungselements mit Aktuator, hier das im Fahrzeugsitz 14 integrierte Versteifungselement 22 mit Aktuator 26, schematisch dargestellt. Bei dem Ausführungsbeispiel der Fig. 6 sind beide Elementabschnitte 221 und 222 des Versteifungselements 22'' anders als in den Ausführungsbeispielen gemäß Fig. 1 - 5 nicht über den Kniehebel durchgängig miteinander verbunden, sondern vereinzelt und im Abstand unter einem Treib- und Verblockungskörper 34 angeordnet, der durch den Aktuator 26 quer zu den Elementabschnitten 221,222 verschiebbar ist und dabei über Schrägflächen 341 und 342 die Elementabsehnitte 221,222 soweit auseinandertreibt, bis er mit diesen fluchtend zwischen diesen einliegt und sie gegeneinander abstützt (verblockt). Wie nicht weiter dargestellt ist, sind hierzu die beiden Elementabschnitte 221,222 in Führungen axial verschieblich geführt und liegen mit ihren einander zugekehrten Enden kraftschlüssig an den Schrägflächen 341 und 342 des Treib- und Verblockungskörpers 34 an. In Fig. 6a ist das Versteifungselement 22'' mit Treib- und Verblockungskörper 34 vor Einwirkung des Aktuators 26 und in Fig. 6b nach Ansprechen des Aktuators 26 dargestellt.

Das in Fig. 7 schematisch skizzierte Ausführungsbeispiel des Versteifungselements 22'' hat den Vorteil des kleinen Bauvolumens. Ein im Ausführungsbeispiel rohrförmiges Führungsprofil 35 ist in dem Fahrzeugsitz 14 fixiert und nimmt die beiden Elementabschnitte 221 und 222 des Versteifungselements 22'' axial verschieblich auf. Zwischen den beiden Elementabschnitten 221 und 222 ist als Aktuator 26 ein z.B. pyrotechnischer Treibsatz 36 angeordnet, der bei seiner Zündung sich nach beiden Seiten ausdehnt und dabei beide Elementabschnitte 221,222 nach außen treibt, so daß sich die beiden Prallplatten 24 an die Prallplatten 24 der anderen Versteifungselemente 21 und 23 in der Fahrzeugtür 12 und in der Mittelkonsole 13 anlegen. In dieser Stellung der Elementabschnitte 221,222 werden diese im Führungsprofil 35 verriegelt (Fig. 7b), so daß über die Prallplatten 24 eine Verblockung aller Versteifungselemente 21,22 und 23 herbeigeführt ist. Wie in Fig. 7a und 7a, die das Versteifungselement 22'' vor und nach Wirksamwerden des Aktuators 26 zeigen, nur schematisch angedeutet ist, können die Elementabschnitte 221,222 beispielhaft dadurch verriegelt werden, daß ein das Führungsprofil 35 radial durchdringender Riegel 37 unter der Kraft einer z.B. als Druckfeder ausgebildeten Riegelfeder 38 auf dem Umfang eines jeden Elementabschnitts 221 bzw. 222 aufliegt und in der Endverschiebeposition des Elementabschnitts 221 bzw. 222 in eine in der Mantelfläche radial eingebrachte Öffnung 39 formschlüssig einfällt. Der Riegel 37 ist dahingehend ausgelegt, daß er die bei Seitenkollision auftretenden Kräfte aufnimmt und ableitet.

## Patentansprüche

1. Fahrgastzelle einer Fahrzeugkarosserie mit einem Karosserieboden und mindestens zwei in den beiden Karosserieseiten integrierten Fahrzeugtüren, mit einer mittig auf dem Karosserieboden befestigten Mittelkonsole, mit jeweils einem zwischen Mittelkonsole und einer Fahrzeugtür angeordneten, am Karosserieboden insbesondere längsverschiebbar gehaltenen Fahrzeugsitz und mit einer die Sitzbenutzer bei Seitenkollision schützenden Schutzeinrichtung, die in jeder Fahrzeugtür, jedem Fahrzeugsitz und in der Mittelkonsole integrierte, quer zur Zellenlängsachse verlaufende Versteifungselemente und zwischen diesen angeordnete Prallplatten umfaßt, wobei die Versteifungslemente so angeordnet sind, daß sie sich bei Seitenkollision über die Prallplatten aneinander abstützen,
**dadurch gekennzeichnet,**
daß mindestens eines der bei Seitenkollision sich quer zur Zellenlängsachse aneinander abstützenden Versteifungselemente (22;21',23';21',22,23') auf eine Maximallänge derart vergrößerbar ausgebildet ist, daß alle im Vorkollisionszustand der Fahrgastzelle zwischen den Versteifungslementen (21-23) und Prallplatten (24) in Abstützrichtung vorhandenen, lichten Abstände (a₁,a₂) beseitigt sind, daß ein im Kollisionsfall aktivierbarer Aktuator (26) vorgesehen ist, der das mindestens eine Versteifungslement (22;21',23';21',22,23') auf Maximallänge einstellt, und daß hierzu das mindestens eine Versteifungselement (22;21',23';21',22,23') einen V-förmigen Kniehebel (25) aufweist, dessen beiden Hebelarme (251,252) und dessen von den Hebelarmen (251,252) im Vorkollisionszustand eingeschlossener Kniewinkel (α) so bemessen sind, daß die Summe aller Spaltabstände (a₁,a₂) zwischen den Prallplatten (24) in Strecklage des Kniehebels (25) Null ist.

2. Fahrgastzelle nach Anspruch 1,
**dadurch gekennzeichnet,**
daß die Hebelarme (251,252) in Strecklage des Kniehebels (25) sich über an den Hebelarmen (251,252) und an den daran anschließenden Abschnitten (221,222) des Versteifungselements (22) ausgebildeten ebenen Abstützflächen (27-32) aneinander und an den Versteifungselementabschnitten (221,222) abstützen.

3. Fahrgastzelle nach Anspruch 1 oder 2,
**dadurch gekennzeichnet,**
daß der Aktuator (26) eine auf das Kniegelenk (153) wirkende Druckkraft erzeugt, die den Kniehebel (25) in Strecklage überführt.

4. Fahrgastzelle nach einem der Ansprüche 1 - 3,
**dadurch gekennzeichnet,**
daß der Kniehebel (25) in seiner Strecklage verrastbar ist.

5. Fahrgastzelle einer Fahrzeugkarosserie mit einem Karosserieboden und mindestens zwei in den beiden Karosserieseiten integrierten Fahrzeugtüren, mit einer mittig auf dem Karosserieboden befestigten Mittelkonsole, mit jeweils einem zwischen Mittelkonsole und einer Fahrzeugtür angeordneten, am Karosserieboden insbesondere längsverschiebbar gehaltenen Fahrzeugsitz und mit einer die Sitzbenutzer bei Seitenkollision schützenden Schutzeinrichtung, die in jeder Fahrzeugtür, jedem Fahrzeugsitz und in der Mittelkonsole integrierte, quer zur Zellenlängsachse verlaufende Versteifungselemente und zwischen diesen angeordnete Prallplatten umfaßt, wobei die Versteifungslemente so angeordnet sind, daß sie sich bei Seitenkollision über die Prallplatten aneinander abstützen,
**dadurch gekennzeichnet,**
daß mindestens eines der bei Seitenkollision sich quer zur Zellenlängsachse aneinander abstützenden Versteifungselemente (22;21',23';21',22,23') auf eine Maximallänge derart vergrößerbar ausgebildet ist, daß alle im Vorkollisionszustand der Fahrgastzelle zwischen den Versteifungslementen (21-23) und Prallplatten (24) in Abstützrichtung vorhandenen, lichten Abstände (a₁,a₂) beseitigt sind, daß ein im Kollisionstall aktivierbarer Aktuator (26) vorgesehen ist, der das mindestens eine Versteifungslement (22;21',23';21',22,23') auf Maximallänge einstellt und daß hierzu das mindestens eine Versteifungselement (22'') in zwei Elementabschnitte (221,222) unterteilt ist, die in einer Führung axial verschieblich geführt sind, und einen vom Aktuator (26) betätigten Treib- und Verblockungskörper (34) aufweist, der zwischen die einander zugekehrten Stirnenden der Elementabschnitte (221,222) zu deren Verschiebung und Verblockung eintaucht.

6. Fahrgastzelle nach Anspruch 5,
**dadurch gekennzeichnet,**
daß die Elementabschnitte (221,222) des Versteifungselements (22'') mit ihren einander zugekehrten Stirnseiten, vorzugsweise kraftschlüssig, an Keilschrägen (341,342) anliegen, die am Treib- und Verblockungskörper (34) ausgebildet sind.

7. Fahrgastzelle einer Fahrzeugkarosserie mit einem Karosserieboden und mindestens zwei in den beiden Karosserieseiten integrierten Fahrzeugtüren, mit einer mittig auf dem Karosserieboden befestigten Mittelkonsole, mit jeweils einem zwischen Mittelkonsole und einer Fahrzeugtür angeordneten, am Karosserieboden insbesondere längsverschiebbar gehaltenen Fahrzeugsitz und mit einer die Sitzbenutzer bei Seitenkollision schützenden Schutzeinrichtung, die in jeder Fahrzeugtür, jedem Fahrzeugsitz und in der Mittelkonsole integrierte, quer zur Zellenlängsachse verlaufende Versteifungselemente und zwischen diesen angeordnete Prallplatten umfaßt, wobei die Versteifungslemente so angeordnet sind, daß sie sich bei Seitenkollision über die Prallplatten aneinander abstützen,
**dadurch gekennzeichnet,**
daß mindestens eines der bei Seitenkollision sich quer zur Zellenlängsachse aneinander abstützenden Versteifungselemente (22;21',23';21',22,23') auf eine Maximallänge derart vergrößerbar ausgebildet ist, daß alle im Vorkollisionszustand der Fahrgastzelle zwischen den Versteifungslementen (21-23) und Prallplatten (24) in Abstützrichtung vorhandenen, lichten Abstände (a₁,a₂) beseitigt sind, daß ein im Kollisionsfall aktivierbarer Aktuator (26) vorgesehen ist, der das mindestens eine Versteifungslement (22;21',23';21',22,23') auf Maximallänge einstellt, und daß hierzu das mindestens eine Versteifungselement (22'') in zwei Elementabschnitte (221,222) unterteilt ist, die in einem Führungsprofil (35) axial verschieblich aufgenommen sind, der Aktuator (26) als Treibsatz ausgebildet ist, der zwischen den Elementabschnitten (221,222) in dem Führungsprofil (35) angeordnet ist, und zwischen jedem Elementabschnitt (221,222) und dem Führungsprofil (35) eine Verriegelung (37,38,39) vorgesehen ist, die in einer die Verblockung aller Versteifungslemente (21,22'',23) herbeiführenden Verschiebelage der Elementabschnitte (221,222) selbsttätig wirksam wird.

8. Fahrgastzelle nach einem der Ansprüche 1 - 7,
**dadurch gekennzeichnet,**
daß jeweils ein längenvergrößerbares Versteifungselement (22) innerhalb eines jeden Fahrzeugsitzes (14) angeordnet ist.

9. Fahrgastzelle nach einem der Ansprüche 1 - 8,
**dadurch gekennzeichnet,**
daß jeweils ein längenvergrößerbares Versteifungselement (21',23') in jeder Fahrzeugtür (12) und in der Mittelkonsole (13) angeordnet ist.

10. Fahrgastzelle nach einem der Ansprüche 1 - 9,
**dadurch gekennzeichnet,**
daß die an einander zugekehrten Stirnenden der Versteifungselemente (21-23) angeordneten Prallplatten (24) sich jeweils über den Bereich einer möglichen Sitzverstellung (Längs- und Höhenverstellung) erstrecken.

11. Fahrgastzelle nach einen der Ansprüche 1 - 10,
**dadurch gekennzeichnet,**
daß die Versteifungslemente (21-23) aus hochtesten Material, wie Metall- oder Kevlar, ausgebildet sind.

12. Fahrgastzelle nach einem der Ansprüche 1 - 11,
**dadurch gekennzeichnet,**
daß die Prallplatten (24) in den Fahrzeugtüren (12), der Mittelkonsole (13) und den Fahrzeugsitzen (14) integriert und durch die jeweilige Verkleidung kaschiert sind und daß in der Verkleidung in Bereich der Prallplatte (24) eine Reißnaht vorgesehen ist.
